Europäisches Patentamt

European Patent Office

Office européen des brevets

(11) Publication number: **0 233 670**
**A2**

## (12) EUROPEAN PATENT APPLICATION

(21) Application number: **87200172.2**

(22) Date of filing: **04.02.87**

(51) Int. Cl.⁴: **B62D 31/00**

(30) Priority: **13.02.86 IT 1939786**

(43) Date of publication of application:
**26.08.87 Bulletin 87/35**

(84) Designated Contracting States:
**DE FR GB**

(71) Applicant: **ALFA LANCIA INDUSTRIALE S.r.l.**
**Viale Alfa Romeo**
**I-20020 Arese Milan(IT)**

(72) Inventor: **Alzati, Eugenio**
**Via Larga 6**
**I-20122 Milano(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Convertible car, in particular convertible motorcar.**

(57) The present invention relates to a convertible motor car realized with a lower frame, which supports the mechanical units, and with an upper, on-sight frame which is made integral with the first one, and is suitable to support the panels, easily detachable, of the skin of the various versions of the same car.

Fig. 1

## "CONVERTIBLE CAR, IN PARTICULAR CONVERTIBLE MOTORCAR"

The present invention relates to a convertible car, in particular to a convertible motorcar.

With the more and more widespread use of motorcar, in particular for the free time activities, the demand increases for cars above all functional, and particularly suitable for cross-country travel.

The problem thus arises of manufacturing cars endowed with these characteristics, in limited series, preferably differentiated, but with limited costs.

Main purpose of the present invention is a convertible car, which is endowed with the possibility of being given different configurations, in relation to the particular uses the user wishes to destine it.

Another purpose of the present invention is represented by the possibility of carrying out the conversions of the car by means of simple operations, which may be carried out after the car assemblage in the factory, also by not specialized people, such as the same car owner.

In view thereof, we have provided for the car to be realized in a basic version, from which alternative versions can be derived by means of a modular assemblage process.

Advantageously, the car is equipped with mechanical units suitable also for cross-country travel.

The car according to the invention is realized with a lower frame suitable to support mechanical units, the wheels, a floor, and is characterized in that it is also realized with an upper frame, made integral with the lower frame, and suitable to support, at least partly in a detachable way, panels forming the skin of same car.

The car is furthermore characterized in that said upper frame is formed by tubular elements, which run on sight along the profile of the same car.

In a preferred solution, the car, in its basic version, has a passenger compartment bounded in its upper portion by the only frame formed by tubular elements, with floor, dashboard, seats, coated with water-proof material and with drive devices, instruments, ancillary equipment, realized as tightly sealed devices, wherein the profile of the front portion of the car is modeled by panels fastened onto the tubular elements of the upper frame, in such a way as to leave the same tubular elements on sight.

In a derived version of the car, also the profile of its passenger compartment is modeled by panels fastened onto the tubular elements of the upper frame, so to leave the same tubular elements on sight.

In another derived version of the car, also the profile of its rear portion is modeled by panels fastened onto the tubular elements, so to leave the same tubular elements on sight.

Preferably, the said panels are fastened onto the tubular elements of the frame by means of detachable connections, so that also a not-specialized person can undertake both assemblage and disassemblage, in particular to the purpose of modifying the configuration and the possibility of use of the car.

Characteristics and advantages of the invention are now illustrated with reference to the hereto attached Figures 1-5, wherein to the purpose of non-limitative example, preferred forms of practical embodiment of the same invention are shown.

Figures 1 and 2 are respectively side and front perspective views of the car according to the invention.

Figure 3 is a side view of the lower frame of the car of Figure 1.

Figures 4 and 5 are side view of variants of the car of Figure 1.

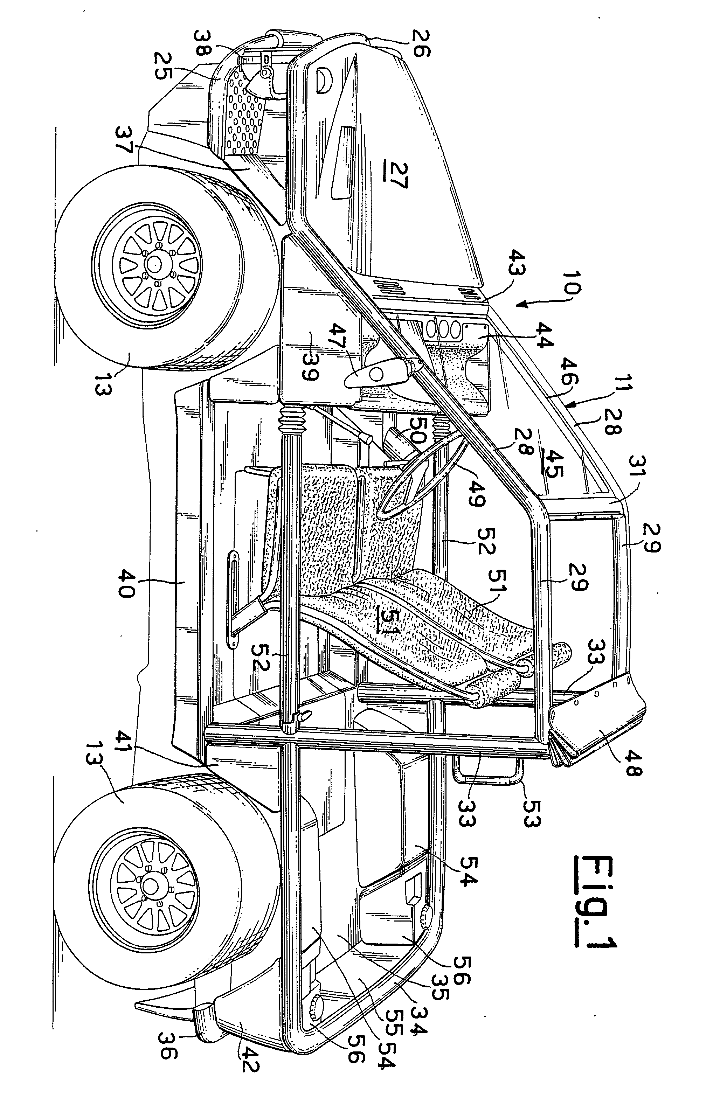

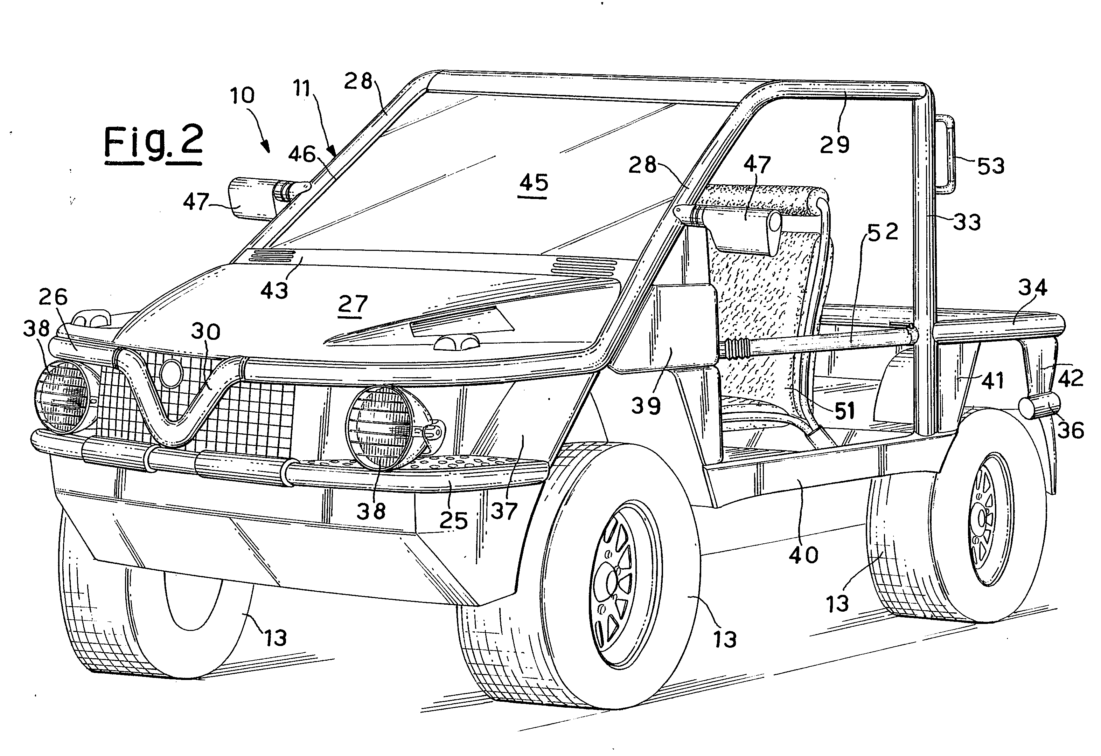

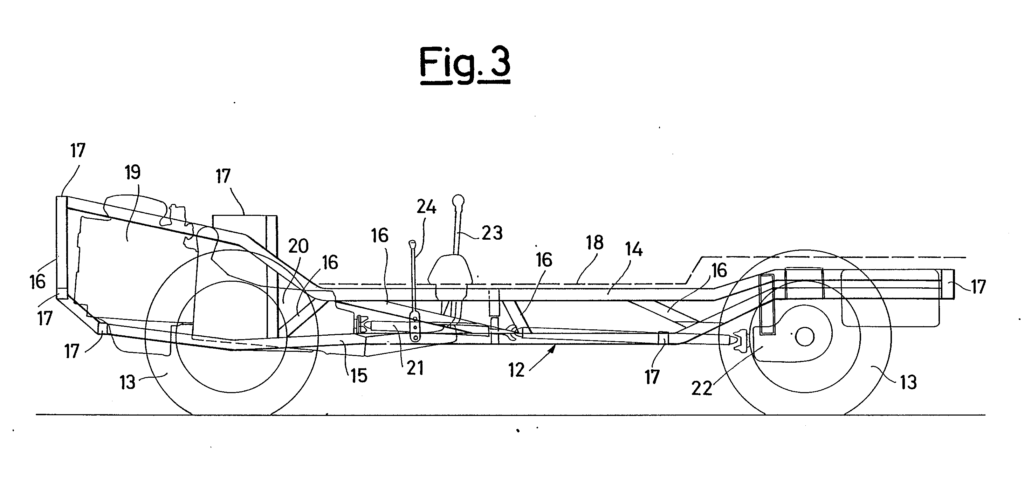

In Figures 1 and 2, with 10 the car of the invention, in its basic version, is indicated; with 11 the upper frame is generally indicated, which is formed by tubular elements, which are made integral, e.g., by welding, with the lower frame (car frame), shown in Figure 3, wherein it is generally indicated with 12; with 13 the wheels of the car are shown.

The lower frame shown in Figure 3 comprises two longitudinal members, 14 and 15, connected by windbracings 16. Crosspieces, such as those indicated with 17, connect the above said couple of longitudinal members 14 and 15, with the couple symmetrically positioned relatively to the longitudinal middle axis of the car.

In Figure 3, the floor 18, made integral, preferably by welding, with the lower frame 12, is shown by dotted line; and the engine 13, the gearbox-front differential unit 20, the propeller shaft 21, the rear differential 22, the gearbox lever 23 are shown.

In this specific case, the car is of the front-wheel drive type, and in it the possibility is provided of manual insertion, by the lever 24, of the rear-wheel drive, for the travel in integral drive configuration.

In Figures 1 and 2, a tubular element bent to a "C"-shape is indicated with 25; said tubular element acts as the front bumper and is fastened onto the lower frame 12.

The upper frame 11 comprises two tubular elements, variously bent to angular shapes, symmetrical relatively to the longitudinal middle axis of the car, which run, with their lengths 26, along the perimeter of the bonnet 27, form, with their lengths 28, the front uprights and, with their lengths 29, the longitudinal members of car roof.

With the uprights 28 and the longitudinal members 14 of the lower frame, two vertical tubular elements, not shown, realizing additional front uprights, are made integral.

On the front of the car, the lengths 26 of the tubular elements are connected by a tubular element bent to a "V"-shape, indicated with 30, and visible in Figure 2.

To the longitudinal members 29 welded are two tubular elements, which form the roof crosspieces, similar to the from crosspiece, indicated with 31.

At the basis of the front uprights a tubular element is provided, which forms a crosspiece, not shown, connecting the uprights 28, onto which crosspiece the bonnet 27 is hinged.

The frame 11 comprises furthermore the tubular elements 33, which form the rear uprights, by being welded to the longitudinal members 29, as well as the tubular element 34, bent to a "C"-shape, which runs along the edge of the rear deck 35 of the car, and is welded to the uprights 33.

With 36, indicated is a tubular element bent to a "C"-shape, which acts as the rear bumper, and is fastened onto the lower frame 12.

On assemblage, the tubular elements of the frame 11 are welded to the longitudinal members 14 and to the crosspieces 17 of the lower frame 12.

The tubular elements which form the upper frame 11 are made from steel, and have a circular cross section, having a diameter comprised, e.g., within the range of from 20 to 120 mm. However, the tubular elements of the frame might also have a differently shaped cross section.

Onto the tubular elements 25 and 26 the panels 37, one right-hand panel and one left-hand panel, are fastened, which act as the fenders for the front wheels; the lights 38 are supported by the tubular element 25. Onto the uprights 28 and floor 18, the right-hand and left-hand panels 39 are fastened, which act as fenders, and partly sheathe the car sides. Onto the floor 18, too, the longitudinal-member covers, such as the one indicated with 40, are fastened.

Onto the uprights 33 and tubular element 34, the right-hand and left-hand panels 41 are fastened, which act as the fenders for the rear wheels, and onto the tubular elements 34 and 36 the panel 42 is fastened, which forms the rear fenders, and acts as the tailboard for the rear deck 35.

The car's skin panels are preferably realized from plastic reinforced by fibreglass or from other plastic material, and are fastened onto the tubular elements in correspondence of their -inwards bent -edges either by means of easily detachable connections, such as screws, with sealing gaskets being possibly interposed; or by bonding by structural adhesives.

As it results from Figures 1 and 2, the tubular elements of the upper frame 11 remain on sight and perform thus a structural and aesthetical function.

In Figures 1 and 2, with 43 a connection panel is indicated, which is interplaced between the bonnet 27 and the instrument-bearing dashboard. With 45 the windscreen glass is indicated, which is supported by a gasket 46, adhesive-bonded inside special channel-shaped seats provided on panel 43, on uprights 28 and on crosspiece 31.

The car could be assembled as well without windscreen.

Onto the uprights 28, the sideview mirrors 47 are fastened, and onto the crosspieces 31 the supports for a convertible top 48 are fastened. Of course, the roof of the car could also be formed by a rigid panel, fastened, in a preferably detachable way, onto the frame 11. On the front crosspiece 31 ancillary equipment pieces, such as additional lights, radio aerial, horns, could be installed.

The dashboard 44 is coated with a waterproof material, and the instruments installed on it, not shown because usual, are of tight type. Also tightly sealed are the hollows, not visible, which house the cables for the electrical power supply to the instruments provided in the dashboard, as well as the devices, they too not shown, relating to car drive.

Also coated by waterproof materials are the steering wheel 49, the steering column 50, the right-hand and left-hand seats 51, the floor 18, the rear deck 35.

Onto the tubular elements which realize the already mentioned, not-shown, additional front uprights, tubular elements 52 are rotatably supported and form bars which can be opened to the purpose of allowing entering the car. Onto a rear upright 33 a support handle, indicated with 53, is fastened.

The side walls of deck 35 are interiorly sheathed with panels 54 and 55, joint-assembled or adhesive-bonded between the tubular element 34 and the same deck 35. In the same way, the containers 56 can be mounted.

As it results from Figures 1 and 2, the basic version of the car is realized with the passenger compartment and the rear deck open to air, and is hence particularly suitable for use in a marine surrounding.

The rear deck 35 may serve for the transport of other light vehicles, such as a motor-cycle, a small boat, or also as a support for a camping tent.

If necessary, the rear deck 35 could be closed by a cover panel, fastened onto the tubular element 34, e.g., by means of hooks.

As said, the car can be easily converted, to be made suitable for different uses, by means of the assembling of further skin panels, which can be fastened onto the tubular elements of frame 11 by means of detachable connections, such as, e.g., screws or hooks.

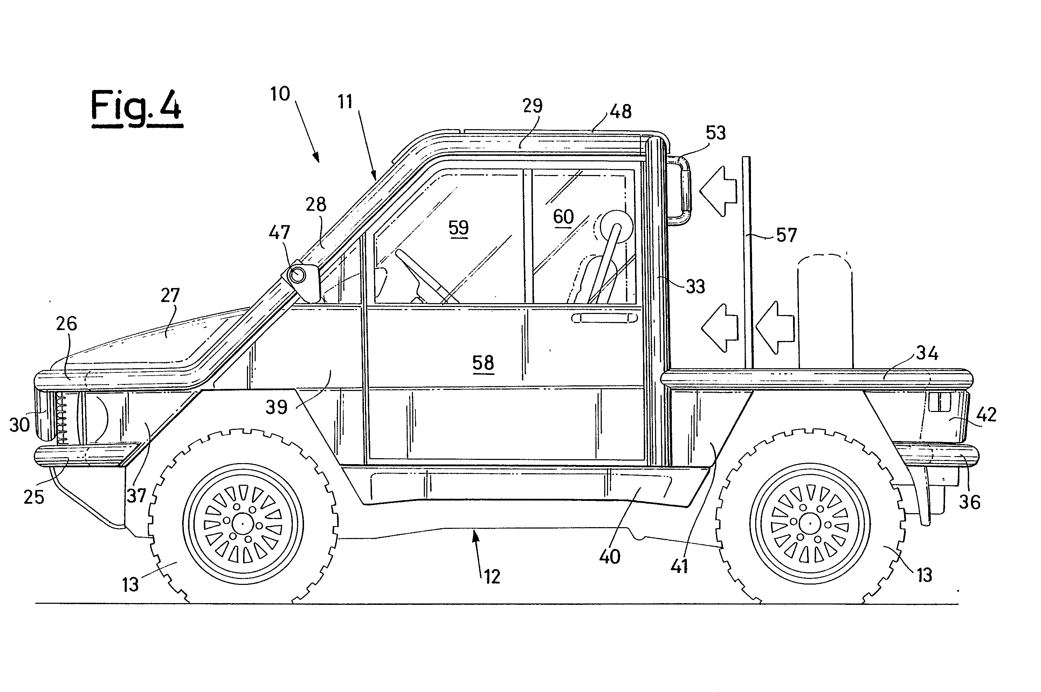

In Figure 4, one of accomplishable configurations is shown. In this case, the passenger compartment is rearwards closed by a panel 57, provided with a rear windshield, not shown, and is sideways closed by doors 58, provided with longitudinally sliding window glasses 59 and 60. The doors are rotatably supported by the tubular elements, which constitute the additional, not-shown, front uprights.

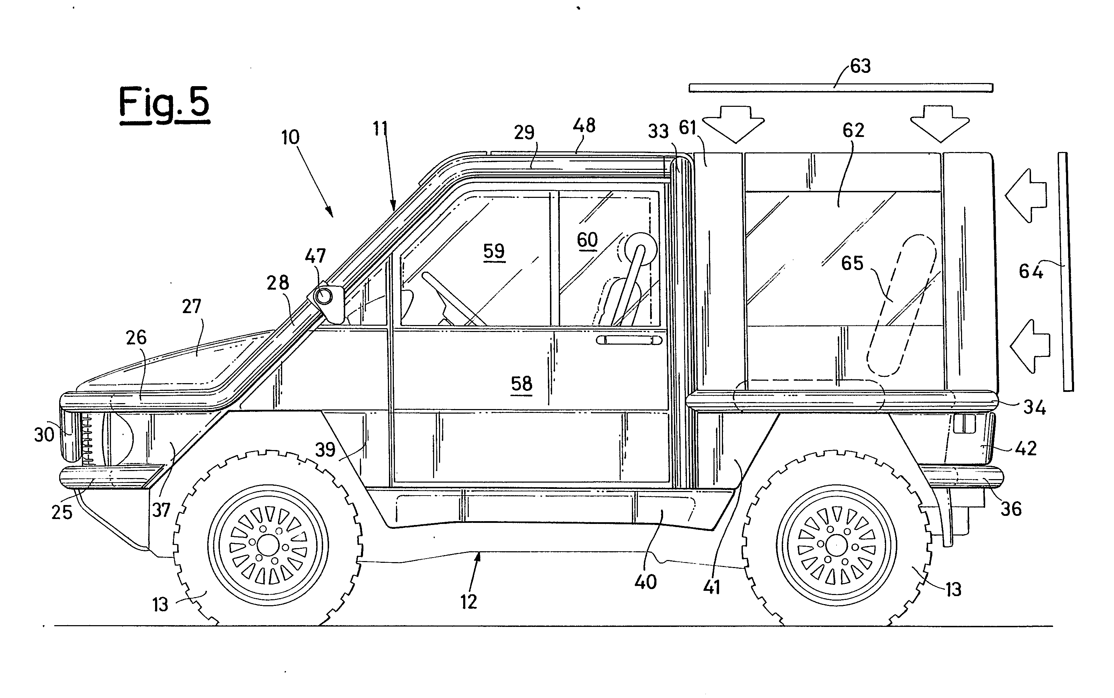

In Figure 5, a further one among accomplishable configurations is shown. In this particular case, the rear deck is covered by two side panels 61, provided with a window 62, by a top panel 63 and by a rear panel 64, provided with rear windscreen, not shown. On the rear deck, rear seats 65 are mounted.

The covering of rear deck, shown in Figure 5, could also be realized with waterproof fabric, supported by a special frame fastened onto the tubular element 34 or onto the same deck.

## Claims

1. Convertible car, in particular convertible motorcar, realized with a lower frame suitable to support mechanical units, the wheels, a floor, and characterized in that it is also realized with an upper frame, made integral with the lower frame, and suitable to support, at least partly in a detachable way, panels forming the skin of same car.

2. Car according to claim 1, characterized in that said upper frame is formed by tubular elements, which run on sight along at least a portion of the profile of the same car.

3. Car according to claim 2, characterized in that its passenger compartment is bounded in its upper portion by the only frame formed by tubular elements, with floor, dashboard, seats, coated with water-proof material and with drive devices, instruments, ancillary equipment, realized as tightly sealed devices, wherein the profile of the front portion of the car is modeled by panels fastened onto the tubular elements of the upper frame, in such a way as to leave the same tubular elements on sight.

4. Car according to claim 3, characterized in that also the profile of its passenger compartment is modeled by panels fastened onto the tubular elements of the upper frame, so to leave the same tubular elements on sight.

5. Car according to claim 3, characterized in that also the profile of its rear portion is modeled by panels fastened onto the tubular elements of the upper frame, so to leave the same tubular elements on sight.

6. Car according to claim 2, characterized in that the said panels are fastened onto the tubular elements of the frame by means of detachable connections.

7. Car according to claim 2, characterized in that the above said upper frame is formed by first tubular elements variously bent to angular shapes, running along the periphery of the bonnet, and which form the front uprights and the roof longitudinal members, by second tubular elements which form the rear uprights and are welded onto the above-said longitudinal members, by third tubular elements which form additional front uprights, by fourth tubular elements which form the roof crosspieces and are welded onto the same room longitudinal members, and by a fifth tubular element, which is bent to a substantial "C"-shape and runs along the edge of a rear deck of the floor.

8. Car according to claim 7, characterized in that the above said upper frame comprises furthermore a sixth tubular element situated at the basis of the windscreen, which acts as a connection crosspiece connecting the above said first tubular elements.

9. Car according to claim 2, characterized in that the front and rear bumpers are formed by tubular elements bent to a substantial "C"-shape.

10. Car according to claim 2, characterized in that tubular elements, which form bars which can be opened to the purpose of allowing entering the passenger compartment, are rotatably supported by tubular elements which form additional front uprights of the upper frame.

11. Car according to claim 4, characterized in that door-shaped panels are rotatably supported by tubular elements which form additional front uprights of the upper frame.

12. Car according to claim 7, characterized in that a panel for the rearwards closure of the passenger compartment is fastened by means of detachable connections to the tubular elements which form the rear upwards.

13. Car according to claim 7, characterized in that a panel for the closure of the rear deck of the floor is fastened by detachable connections to said fifth tubular element.

14. Car according to claim 7, characterized in that panels for the closure of the rear deck of the floor are fastened by means of detachable connections to said second, fourth and fifth tubular elements.

Fig.1

0 233 670

**Fig.2**

0 233 670

# Fig.3

0 233 670

# Fig.4

0 233 670

Fig.5